(19) Europäisches Patentamt
European Patent Office
Office européen des brevets

(11) EP 4 243 127 A1

(12) DEMANDE DE BREVET EUROPEEN

(43) Date de publication:
13.09.2023 Bulletin 2023/37

(21) Numéro de dépôt: 23160815.9

(22) Date de dépôt: 08.03.2023

(51) Classification Internationale des Brevets (IPC):
H01M 4/66 (2006.01)          H01M 50/105 (2021.01)
H01M 50/186 (2021.01)        H01M 50/198 (2021.01)
H01M 50/528 (2021.01)        H01M 50/536 (2021.01)
H01M 50/553 (2021.01)        H01M 50/562 (2021.01)
H01M 10/058 (2010.01)        H01M 10/0525 (2010.01)

(52) Classification Coopérative des Brevets (CPC):
H01M 50/105; H01M 4/663; H01M 10/058;
H01M 50/186; H01M 50/198; H01M 50/528;
H01M 50/536; H01M 50/553; H01M 50/562;
H01M 10/0525

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
KH MA MD TN

(30) Priorité: 09.03.2022 FR 2202043

(71) Demandeur: Commissariat à l'énergie atomique
et aux énergies alternatives
75015 Paris (FR)

(72) Inventeurs:
• SALOMON, Jérémie
38054 GRENOBLE CEDEX 09 (FR)
• AMESTOY, Benjamin
38054 GRENOBLE CEDEX 09 (FR)
• VINCENS, Christophe
38054 GRENOBLE CEDEX 09 (FR)

(74) Mandataire: Cabinet Nony
11 rue Saint-Georges
75009 Paris (FR)

(54) **COLLECTEUR DE COURANT POREUX AVEC JONCTION OBTENUE PAR SCELLAGE THERMIQUE D'UN POLYMÈRE THERMOFUSIBLE À UNE LANGUETTE DE CONNEXION ÉLECTRIQUE DENSE POUR SYSTÈME ÉLECTROCHIMIQUE ÉTANCHE**

(57) L'invention concerne un système électrochimique étanche, comprenant :
- un emballage (6);
- un substrat (2S, 3 S) électriquement conducteur et poreux, formant un collecteur de courant et supportant, sur au moins une de ses faces principales, au moins un motif continu de matériau actif d'une électrode (21, 31); le substrat poreux étant de préférence à base de fibres de carbone ;
- au moins une languette (4, 5) électriquement conductrice et dense, liée au substrat selon au moins une jonction électriquement conductrice (1) obtenue par scellage thermique d'un polymère thermofusible électriquement conducteur (7), la languette supportant sur chacune de ses faces principales au moins un ruban d'étanchéité scellé à l'emballage pour garantir la fermeture étanche de celui-ci.

[Fig 12]

Fig. 12

## Description

### Domaine technique

La présente invention concerne le domaine des systèmes électrochimiques comprenant un emballage pour garantir l'étanchéité du coeur vis-à-vis de l'extérieur.

Plus particulièrement, il peut s'agir de générateurs électrochimiques métal-ion, qui fonctionnent selon le principe d'insertion ou de désinsertion, ou autrement dit intercalation-désintercalation, d'ions métal dans au moins une électrode.

Elle concerne plus particulièrement un accumulateur électrochimique au lithium ou lithium-ion.

L'invention a trait en particulier à la réalisation de la jonction entre un collecteur de courant poreux, en particulier à base de fibres de carbone, avec une languette de sortie métallique pour accumulateur électrochimique métal-ion.

Bien que décrite en référence à un accumulateur Lithium-ion, l'invention s'applique à tout accumulateur électrochimique métal-ion, c'est-à-dire également les accumulateurs sodium-ion, Magnésium-ion, Aluminium-ion... ou de manière plus générale à tout accumulateur électrochimique comme par exemple le lithium-soufre ou le lithium-air.

### Technique antérieure

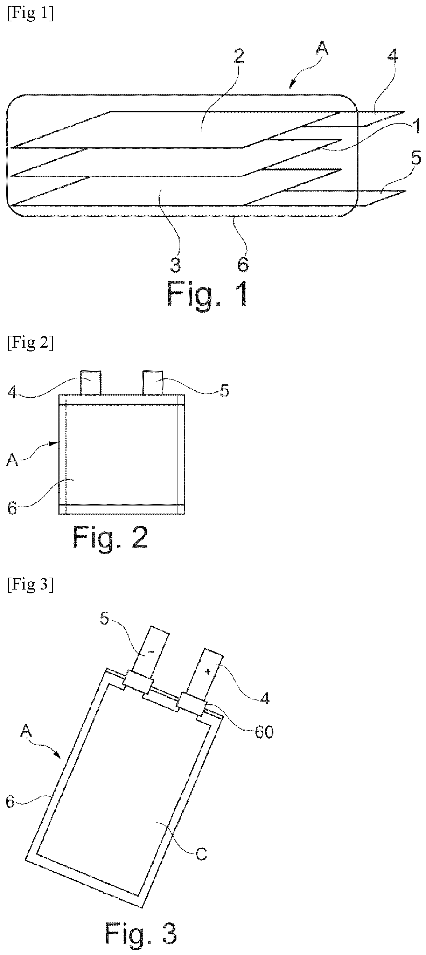

Telle qu'illustrée schématiquement en figures 1 et 2, une batterie ou accumulateur lithium-ion comporte usuellement au moins une cellule électrochimique constituée d'un constituant d'électrolyte 1 entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique avec étanchéité tout en étant traversé par une partie des collecteurs de courant 4, 5.

L'architecture des batteries lithium-ion conventionnelles comporte une anode, une cathode et un électrolyte. Plusieurs types de géométrie d'architecture conventionnelle sont connus :

- une géométrie cylindrique telle que divulguée dans la demande de brevet US 2006/0121348,

- une géométrie prismatique telle que divulguée dans les brevets US 7348098, US 7338733;

- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous cette dernière forme, le constituant peut comprendre un séparateur en polymère, en céramique ou en composite microporeux imbibé d'électrolyte (s) organique (s) ou de type liquide ionique qui permet le déplacement des ions Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium qui sont en général composite, comme le phosphate de fer lithié $LiFePO_4$, l'oxyde de cobalt lithié $LiCoO_2$, l'oxyde de manganèse lithié, éventuellement substitué, $LiMn_2O_4$ ou d'oxyde de métaux de transition, comme les matériaux lamellaires par exemple, un matériau à base de $LiNi_xMn_yCo_zO_2$ avec x+y+z = 1, tel que $LiNi_{0.33}Mn_{0.33}Co_{0.33}O_2$ appelé plus communément NMC111, $LiNi_{0.6}Mn_{0.2}Co_{0.2}O_2$ appelé plus communément NMC622 ou $LiNi_{0.8}Mn_{0.1}Co_{0.1}O_2$ appelé plus communément NMC811 ou un matériau à base de type oxyde de nickel cobalt aluminium $LiNi_xCo_yAl_zO_2$ avec x+y+z = 1, tel que $LiNi_{0.8}Co_{0.15}Al_{0.05}O_2$ appelé plus communément NCA.

L'électrode négative ou anode est très souvent constituée de carbone, graphite ou en $Li_4TiO_5O_{12}$ (matériau titanate), éventuellement également à base de silicium ou à base de lithium, ou à base d'étain et de leurs alliages ou de composite formé à base de silicium.

L'électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en oeuvre.

Les électrodes, positive et négative, sont classiquement fabriquées par enduction, en déposant en continu une encre, contenant le matériau actif, un solvant, un liant et éventuellement un additif électriquement conducteur, sur les collecteurs de courant. La technique la plus couramment utilisée est la technique dite d'enduction avec une fente filière (ou « slot die » en anglais). Concrètement, un feuillard métallique destiné à former le collecteur de courant défile entre un rouleau d'entrainement et une filière en forme de fente de distribution, reliée à un réservoir contenant l'encre. Une couche d'encre est ainsi formée sur le feuillard métallique, dans sa portion centrale, les bandes latérales (ou rives) du feuillard restant nues. Le solvant est, ensuite, évaporé lors d'un séchage en ligne pour former l'électrode. Une étape de séchage est ensuite réalisée pour évaporer les résidus de solvant. Puis une étape de calandrage est réalisée pour diminuer la porosité et augmenter la conductivité de l'électrode.

Le collecteur de courant 4 connecté à l'électrode positive est en général en aluminium.

Le collecteur de courant 5 connecté à l'électrode négative est en général en cuivre, en cuivre nickelé ou en aluminium.

Plus précisément, l'aluminium est utilisé pour les collecteurs de courant communs à des électrodes positive et négative de titanate $Li_4Ti_5O_{12}$. Le cuivre est plutôt pour les électrodes négatives de graphite (Cgr), de silicium (Si) ou de composite silicium (Si-C).

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 3,6 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages rigides (boitiers) sont usuellement fabriqués à partir d'un matériau métallique, typiquement un alliage d'aluminium ou en acier inoxydable ou d'un polymère rigide comme par exemple l'acrylonitrile butadiène styrène (ABS).

Les emballages souples sont usuellement fabriqués à partir d'un matériau composite multicouche constitué d'une feuille d'aluminium recouverte par un ou plusieurs film(s) en polymère laminés par collage. Dans la plupart de ces emballages souples, le polymère recouvrant l'aluminium est choisi parmi le polyéthylène (PE), le polypropylène (PP), le polyamide (PA) ou peut être sous la forme d'une couche adhésive constituée de polyester-polyuréthane. La société Showa Denko commercialise ce type de matériaux composite pour une utilisation en tant qu'emballage de batteries sous les références NADR-0N25/AL40/CPP40 ou N ° ADR-0N25/AL40/CPP80.

La figure 3 illustre ce type d'emballage souple 6 qui est agencé pour isoler et étanchéifier la cellule électrochimique C tout en étant traversé par deux lamelles ou languettes 4, 5, communément appelée en anglais « tab », formant les pôles et qui s'étendent dans le plan de la cellule électrochimique. Comme montré en figure 3, des renforts en polymère 60 à base de polyoléfine peuvent être prévus pour améliorer le scellage à chaud de l'emballage 6 autour des lamelles 4, 5.

L'avantage principal des emballages souples est leur légèreté. Les accumulateurs Li-ion avec les plus grandes densités d'énergie comportent de ce fait un emballage souple. L'inconvénient majeur de ces emballages souples est que leur étanchéité peut se détériorer fortement au cours du temps du fait de la non-tenue chimique du scellage réalisé.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à $10^{-8}$ mbar.l/s, ou dans des milieux à fortes contraintes comme le domaine aéronautique ou spatial.

L'avantage principal des emballages rigides est ainsi leur étanchéité élevée et maintenue au cours du temps du fait que la fermeture des boitiers est réalisée par soudure, en générale par soudure au laser.

Pour obtenir un fonctionnement optimal des accumulateurs Li-ion, la ou les cellules électrochimiques doi(ven)t être étanche(s) vis-à-vis de l'humidité de l'air. Pour garantir cette étanchéité au niveau des connections externes de l'accumulateur, les fabricants utilisent des rivets ou procèdent par soudure laser dans le cas d'un emballage rigide.

Dans le cas d'un emballage souple, on met en oeuvre un ruban d'étanchéité. Il est généralement à base d'un polymère thermofusible autour d'une languette métallique de sortie.

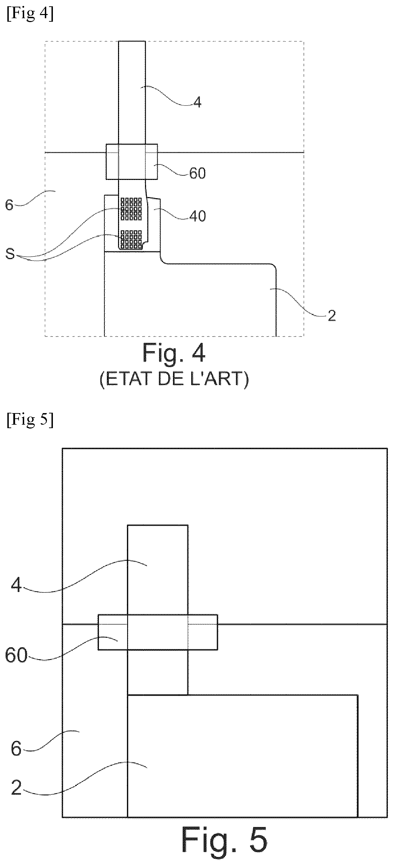

La languette peut être vendue en tant que telle et est dimensionnée en fonction du passage du courant qui est lié à la capacité totale de la batterie. Pour des cellules de capacité inférieure à 2 Ah, ou plus précisément lorsque le courant de passage est inférieur à 5A, la languette a une largeur de 5 mm et une épaisseur de 0,5 mm. Le ruban d'étanchéité est laminé collé sur la languette et généralement a une longueur de 10mm, une largeur de 5mm et une épaisseur de 0,3mm. Un exemple d'une telle languette en aluminium 4 est montré en figure 4.

Ainsi, comme montré en figure 3, des renforts en polymère 60 à base de polyoléfine sont prévus pour améliorer le scellage à chaud de l'emballage 6 autour des languettes 4, 5, et ainsi garantir l'étanchéité de l'accumulateur de l'extérieur vers l'intérieur (eau, oxygène, azote...) et vice et versa (électrolyte, gaz dus aux réactions électrochimiques...).

Généralement, les languettes rapportées 4, 5 sont fixées sur les substrats formant les collecteurs de courant des électrodes par soudures ultra-sons. Les languettes sont en général en nickel lorsqu'elles sont fixées sur un collecteur en cuivre et en aluminium lorsqu'elles sont fixées sur un collecteur en aluminium.

Un exemple de languette en aluminium 4 fixée sur un collecteur en aluminium est montré en figure 4. Un ruban polymère thermofusible 60 est laminé-collé sur chaque face principale de la languette 4.

Les languettes avec ruban étant initialement fourni sous forme d'une bande continue enroulée, la longueur est découpée fonction du besoin pour la languette métallique 4. Dans le cas où l'accumulateur comprend une seule cellule électrochimique, la connexion externe peut aussi être assurée directement par les substrats collecteurs de courant des électrodes qui sont découpées selon une forme de languette.

Dans ce cas, un ruban d'étanchéité qui est vendu séparément de la languette est ajouté sur chaque face principale du substrat collecteur de courant, comme représenté sur la figure 5. Ce ruban polymère thermofusible 60 généralement a une largeur de 5 mm et une épaisseur de 0,1 mm. Le ruban étant initialement fourni sous forme d'une bande continue enroulée, la longueur est découpée fonction du besoin pour le substrat collecteur de courant.

Comme visible sur les figures 4 et 5, la languette métallique 4, typiquement en aluminium est soit soudée au collecteur de courant 40 par des points de soudure S, soit partie intégrante du collecteur de courant 40.

Dans la littérature, on trouve différentes tentatives pour substituer les substrats métalliques des collecteurs de courant par des substrats en carbone ainsi que des solutions de liaison de ces substrats avec des languettes métalliques de sortie.

On peut ainsi citer le brevet US8465871 B2 qui divulgue ainsi la mise en oeuvre d'un substrat en feutre de carbone et une méthode pour relier une languette métallique de sortie au substrat par rivetage.

Le brevet EP2619832B1 au nom de la déposante divulgue un collecteur de courant d'électrode pour batterie lithium, qui est poreux et est réalisé en fibres de carbone tissées ou non tissées.

La demande de brevet WO2017/055705 au nom de la déposante décrit également un procédé de fixation entre un collecteur métallique et un feutre de carbone qui consiste à imprégner le feutre de carbone d'un mélange d'une poudre métallique et de réaliser une soudure entre le collecteur métallique et le feutre de carbone imprégné

Les solutions proposées ne sont pas complètement satisfaisantes. En effet, d'une part, l'étanchéité obtenue n'est pas garantie et d'autre part, ces solutions ne permettent pas d'obtenir réellement un assemblage d'accumulateurs suffisamment flexible pour permettre à une batterie résultant de cet assemblage de se conformer à n'importe quel objet.

C'est pourquoi la demanderesse a proposé dans le brevet EP3486971B1 une fixation par couture d'une languette métallique au collecteur de courant à base d'un substrat poreux de préférence à base de fibres de carbone, en utilisant un fil de carbone et/ou un fil métallique, et d'ajouter un ruban polymère thermofusible de part et d'autre de la languette pour garantir l'étanchéité, ou bien de souder une languette comprenant un ruban d'étanchéité laminé collé.

D'autres solutions ont déjà été proposées.

Les demandes de brevets CN202088602 et CN202308101 divulguent l'utilisation d'un polymère thermofusible à base de polypropylène (PP) pour garantir l'étanchéité au niveau d'une languette sortante d'un collecteur de courant à base de fibres de carbone.

La demande de brevet CN107910486 décrit une méthode pour lier par agrafage un substrat carbone à une languette métallique.

La demande de brevet CN109216703 décrit un collecteur de courant poreux et flexible pour batterie Li-ion sur lequel une fine couche de métal est déposée par technique sous vide. Le collecteur de courant est à base d'un polyoléfine PP ou PE chargé en noir de carbone (CB) et nanotubes de carbone (CNT) qui est étiré pour créer de la porosité.

La demande de brevet CN107591554 fait mention d'un collecteur de courant sous la forme d'un substrat poreux pouvant être à base de fibre de carbone pour la batterie tout solide, l'électrolyte solide étant polymérisé in situ dans le substrat poreux.

La demande de brevet EP3089241 décrit une batterie Zn/NiO-OH dont les électrodes contiennent un collecteur de courant à base de fibres de carbone dont l'interconnexion avec une languette de sortie est assurée par une pâte adhésive à base de Ni ou de carbone.

Le brevet CN106113484 évoque la réalisation de soudure par courant induit entre un métal et un matériau composite constitué d'un thermoplastique avec fibres carbones : la chaleur dégagée par le courant induit qui chauffe le métal fait également fondre le thermoplastique.

Le brevet EP2975681B1 décrit une méthode pour produire un collecteur de courant pour batterie de structure tridimensionnelle, composé de plusieurs couches d'un substrat non tissé intégrant des fibres conductrices (filaments métalliques, fibres de carbone, fibres d'un polymère conducteur ou fibres de polymères métallisés), substrat auquel sont soudées ou fusionnées par enduction, soudure électrique, soudure ultrasons ou soudure thermique, des bandes conductrices généralement métalliques.

Toutes ces solutions ne sont pas complètement satisfaisantes en termes de performances de contact électrique.

Il existe donc un besoin d'améliorer les électrodes d'accumulateurs au lithium qui sont réalisées à partir de substrats collecteurs de courant à base de carbone, notamment afin d'améliorer le contact électrique entre une languette métallique et un substrat collecteur de courant à base de carbone, en garantissant l'étanchéité des accumulateurs tout en leur conférant des caractéristiques de souplesse en vue d'assurer une conformabilité à une batterie qui peut résulte d'un assemblage de plusieurs de ces accumulateurs pour pouvoir se conformer à n'importe quel objet.

Le but de l'invention est de répondre au moins en partie à ce(s) besoin(s).

**Exposé de l'invention**

Pour ce faire, l'invention concerne, sous l'un de ses aspects, un système électrochimique étanche, comprenant:

- un emballage ;

- un substrat électriquement conducteur et poreux, formant un collecteur de courant et supportant, sur au moins une de ses faces principales, au moins un motif continu de matériau actif d'une électrode; le substrat poreux étant de préférence à base de fibres de carbone ;

- au moins une languette électriquement conductrice et dense, liée au substrat selon au moins une jonction électriquement conductrice obtenue par scellage thermique d'un polymère thermofusible électriquement conducteur, la languette supportant sur chacune de ses faces principales au moins un ruban d'étanchéité scellé à l'emballage pour garantir la fermeture étanche de celui-ci.

Par « « poreux », on entend ici et dans le cadre de l'invention, non étanche à l'air ou à un électrolyte notamment par la tranche du substrat.

A contrario, par « dense », on entend ici et dans le cadre de l'invention, étanche à l'air ou à un électrolyte du système électrochimique. La densité massique de la languette est alors égale à la densité théorique du matériau massif la constituant.

Par « électriquement conducteur/conductrice », on entend ici et dans le cadre de l'invention, une conductivité supérieure ou égale à 1S/cm.

L'emballage d'un système selon l'invention peut être rigide ou souple.

De préférence, la languette est métallique, de préférence encore en aluminium, en cuivre ou en nickel. Elle a une épaisseur de préférence comprise entre 6$\mu$m et 500$\mu$m. Mais on peut aussi envisager tout autre matériau dense et suffisamment conducteur, comme certaines céramiques frittées.

De préférence, le polymère thermofusible électriquement conducteur est un composé comprenant un polymère qui d'une part a la capacité de se ramollir sous l'effet de la chaleur et de redevenir dur en refroidissant, et d'autre part comprend au moins une charge électriquement conductrice de préférence à base de carbone pour qu'il soit électriquement conducteur.

Avantageusement, la charge électriquement conductrice à base de carbone est choisie parmi le noir de carbone, les fibres de carbone, les nanotubes de carbone, le graphite, le graphène et leurs dérivés, ou un mélange de ces composés carbonés. La charge peut également être à base d'un métal, de préférence sous la forme de fils métalliques en aluminium, cuivre ou nickel.

Le taux de chargement en charge électriquement conductrice du polymère thermofusible est avantageusement compris entre 5 et 95 % de la masse totale du composé, avantageusement encore compris entre 15 et 55 % massique et encore plus avantageusement entre 25 et 45 % de la masse totale du composé.

De préférence encore, le polymère thermofusible est un élastomère de type polypropylène (PP) et ses dérivés ou polyéthylène (PE) et ses dérivés. Il peut être aussi un thermoplastique de type polyamide (PA) ou poly(téréphtalate d'éthylène) (PET) ou polyéther éther cétone (PEEK) et ses dérivés ou polysulfone (PS) et ses dérivés ou tout autre type de polymère qui se ramollit sous l'effet de la chaleur et redevient dur en refroidissant.

Un polymère thermofusible électriquement conducteur avantageux est déjà disponible commercialement sous la forme de granulés (ou « masterbatch » en anglais), par exemple sous la référence « PP Black Masterbatch-MBB1231 » au nom de la compagnie CHUANGDA PLASTIC INDUSTRY CO., LIMITED, de composition polymère en PP chargé en noir de carbone à un pourcentage massique de 35% +/- 3%, ou sous la référence « CC00024002BG - 46-BK-80 BK PP MASTERBATCH » au nom de la compagnie POLYONE, de composition polymère en PP chargé en noir de carbone à un pourcentage massique de 40%.

Pour fixer la languette électriquement conductrice sur le collecteur de courant à base d'un substrat carboné, des granulés du polymère thermofusible peuvent être directement utilisés. Alternativement, un film peut être avantageusement mis en oeuvre préalablement au scellement thermique en utilisant par exemple une presse chauffante ou en procédant par extrusion.

Un film polymère thermofusible électriquement conducteur mis en oeuvre par pressage à chaud ou par extrusion a avantageusement une épaisseur comprise entre 20 et 500 $\mu$m, et plus avantageusement comprise entre 50 et 200 $\mu$m.

La largeur d'un ruban d'étanchéité est de préférence comprise entre 0,5 et 1 cm. L'épaisseur d'un ruban d'étanchéité est de préférence comprise entre 0,05 et 0,2 mm.

De préférence, le ruban d'étanchéité est à base de polymère thermofusible. Mais on peut aussi envisager tout autre matériau d'étanchéité, tel qu'une colle, du verre, à la condition qu'il soit compatible avec l'électrolyte du système électrochimique.

Selon un mode de réalisation avantageux, le substrat poreux est un substrat à base de fibres de carbone. Il peut s'agir avantageusement d'un substrat non tissé. On peut aussi envisager en tant que substrat poreux, une mousse métallique, telle qu'une mousse en nickel, cuivre...

Selon ce mode de réalisation avantageux, le substrat à base de fibres de carbone est un non tissé réalisé à partir de fibres de carbone de diamètre préférentiellement compris entre 2 et 20 $\mu$m, préférentiellement selon un facteur de forme entre diamètre et longueur supérieur à 10, et de préférence une densité comprise entre 1,8 et 2,2.

Le substrat en non tissé de carbone a de préférence une épaisseur comprise entre 100 et 250 $\mu$m, de préférence une masse volumique comprise entre 30 et 1100 mg/cm3, de préférence une porosité comprise entre 50 et 98%.

Le choix par les inventeurs d'utiliser un collecteur de courant poreux à base de fibres de carbone, apportent les nombreux avantages suivants :

- une flexibilité accrue par rapport aux collecteurs métalliques conventionnels dans les batteries Li-ion,

- une flexibilité similaire pour les électrodes positive et négative puisqu'on peut utiliser le même substrat à base de fibres de carbone, i.e. avec la même épaisseur et les mêmes caractéristiques mécaniques,

- une résistance à la déchirure accrue par rapport à un collecteur de courant métallique classique,

- une augmentation de la densité d'énergie massique par rapport à un collecteur de courant métallique classique, la densité du carbone étant plus faible que celle du cuivre ou de l'aluminium,

- une très bonne compatibilité électrochimique du carbone avec la plupart des matériaux d'insertion d'électrodes.

En revanche, le substrat à base de fibres de carbone étant poreux, en conservant des connexions externes également en substrat à base de fibres de carbone sous la forme de bande/languette nue émergeant du collecteur de courant, les inventeurs ont pu constater que l'étanchéité d'un accumulateur Li-ion n'était pas garantie.

Aussi, pour améliorer cela, les inventeurs ont pensé à utiliser des connexions externes métalliques sous la forme de languettes conductrices denses qui sont fixées au substrat de carbone par scellage thermique un utilisant un polymère thermofusible électriquement conducteur, de préférence sous forme d'au moins un film, qui est intercalé entre les languettes conductrices et le substrat de carbone.

les liaisons entre languettes métalliques et substrats en carbone proposées selon l'état de l'art, telles que décrites dans la demande de brevet WO2017/055705 et brevets US8465871B2, EP2619832B1, EP3486971B1 présentaient des lacunes en termes de résistance mécanique, conduction électrique et de flexibilité aux jonctions.

Selon l'invention, le contact électrique entre la languette métallique et le substrat à base de fibres de carbone se faisant sur toute une surface ou section par un polymère thermofusible électriquement conducteur et non uniquement par des points, comme décrit dans le brevet EP3486971B1, la résistance de contact est réduite.

Cela est régi par l'équation 1 suivante :

[Equation 1]

$$R = \rho \times \frac{l}{S}$$

avec $R$ étant la résistance ($\Omega$), $\rho$ étant la résistivité du matériau ($\Omega$.cm), $l$ la longueur de passage du courant (cm) et $S$ la section de passage du courant (cm$^2$).

La section de passage du courant est d'autant plus importante lorsque les courants sont élevés, notamment lorsque les applications visées nécessitent de la puissance (forts courants de charge ou de décharge).

Les propriétés mécaniques de la jonction carbone - métal sont également améliorées car en se ramollissant sous l'effet de la chaleur, le polymère thermofusible électriquement conducteur va coller et donc adhérer à la languette métallique et au substrat à base de fibres de carbone, voire même va s'imprégner dans les fibres de carbone favorisant ainsi l'accroche mécanique.

En ce qui concerne la fabrication proprement dite de l'électrode, on peut procéder comme suit.

La préparation de l'encre (matériau d'insertion actif) d'électrode est réalisée par le mélange des constituants à savoir le matériau actif, le liant polymère et le conducteur électronique. Le liant polymère, du PVdF ou un polymère soluble dans l'eau dans le cas d'accumulateurs Li-ion conventionnels, a pour fonction d'apporter les propriétés mécaniques des électrodes tout en assurant un bon contact entre l'électrolyte et les grains du matériau. Le conducteur électronique, souvent du noir de carbone, améliore quant à lui la conductivité électronique des électrodes.

L'encre de l'électrode est ensuite déposée sur le collecteur de courant en fibre de carbone par procédé d'enduction qui consiste à couler l'encre sur le collecteur, formant ainsi une bande d'électrode en continue.

Il existe aussi d'autres techniques de dépôt comme l'impression, la pulvérisation, la dispense ou autre qui consiste à déposer l'encre sous forme de motifs sur le collecteur. Ainsi sont formés des motifs continus d'électrode au lieu d'une bande continue.

Les motifs continus d'électrode sont de préférence réalisés par technique d'impression à partir de l'encre préparée, de préférence encore par sérigraphie sur les substrats collecteurs de courant à base de fibres de carbone.

D'autres techniques d'impression peuvent être employées telles que la flexographie, l'héliogravure, le jet d'encre, l'impression par jet d'aérosol... Un avantage important des techniques d'impression est de pouvoir fabriquer des motifs de section variées (carrée, rectangulaire, ronde ou plus complexe) et donc permet d'acquérir une certaine liberté sur le design de l'accumulateur selon l'invention.

Parmi les techniques d'impression, la sérigraphie présente l'avantage de pouvoir déposer une plus grande quantité d'encre en un seul passage, ce qui permet d'obtenir de forts grammages et donc des capacités élevées. De même les cadences de production sont élevées, comparativement à l'enduction qui est le procédé conventionnel utilisé chez les industriels de la batterie, typiquement une vitesse d'impression de 20 à 30 m/min pour la sérigraphie rotative à comparer à une vitesse 15 à 20 m/min pour l'enduction.

Une fois le dépôt du motif continu d'électrode réalisé, on procède à son séchage. Pour ce faire, le solvant est évaporé par passage de l'électrode dans un four en continue ou en statique dans une étuve ventilée. Puis, les électrodes sont ensuite calandrées puis découpées selon le motif visé dans l'application.

L'invention a également pour objet un accumulateur électrochimique (A), notamment métal-ion, constitué à partir d'un système électrochimique étanche décrit précédemment, comprenant un empilement des éléments suivants:

- au moins une électrode négative;

- au moins une électrode positive;

- au moins un film de séparateur isolant électriquement intégrant un électrolyte, agencé en contact avec le motif d'électrode négative et le motif d'électrode positive;

- un emballage agencé pour contenir les électrodes négative et positive, et le film de séparateur, avec étanchéité tout en étant traversé par un premier et un deuxième pôles de l'accumulateur constitués chacun par la languette conductrice scellée thermiquement par un polymère électriquement conducteur au substrat poreux de l'électrode négative et de l'électrode positive, les rubans d'étanchéité des électrodes négative et positive étant scellés thermiquement à l'emballage.

En ce qui concerne la réalisation de la connexion externe, pour chaque électrode négative ou positive, on réalise la fixation d'une languette métallique destinée à former la connexion externe ou pôle d'un accumulateur. La fixation a lieu par scellage thermique au moyen d'un polymère thermofusible électriquement conducteur, de préférence sous forme d'un film.

Comme précisé ci-avant, afin de garantir l'étanchéité de l'accumulateur, quelle que soit la forme retenue pour les pôles, un ruban d'étanchéité est utilisé celui-ci pouvant être soit laminé-collé sur la languette métallique (languette vendue avec le ruban d'étanchéité) soit rapporté et fixé entre l'emballage et les languettes autour de celles-ci. Dans le cas d'un ruban d'étanchéité rapporté, celui-ci est choisi de préférence parmi un polyéthylène (PE) ou un polypropylène (PP).

L'emballage d'un accumulateur selon l'invention est de préférence constitué d'un sachet souple unique. Il peut être fabriqué à partir d'un matériau composite multicouche constitué d'une feuille d'aluminium recouverte par un ou plusieurs film(s) en polymère laminés par collage. Le polymère recouvrant l'aluminium peut être choisi parmi le polyéthylène (PE), le polypropylène (PP), le polyamide (PA) ou peut être sous la forme d'une couche adhésive constituée de polyester-polyuréthane. La société Showa Denko commercialise ce type de matériaux composite pour une utilisation en tant qu'emballage de batteries sous les références NADR-0N25/AL40/CPP40 ou N° ADR-0N25/AL40/CPP80. Ainsi, le sachet souple conforme à l'invention est avantageusement à base d'un film multicouches aluminisé, étanche à l'air.

Afin de procéder au scellement du sachet souple par scellage thermique, on peut tout d'abord sceller thermiquement trois côtés du sachet tout en laissant ouvert le quatrième côté pour l'activation de l'accumulateur par remplissage de l'électrolyte puis, une fois ce remplissage effectué, on scelle thermiquement le quatrième côté, les languettes métalliques traversant le scellement. On comprend alors la problématique de l'étanchéité de l'emballage alors que des connexions électriques à base de fibres de carbone doivent sortir de cet emballage.

L'accumulateur selon l'invention peut être un accumulateur Li-ion, les motifs d'électrode étant en matériau d'insertion du lithium.

Par « électrode en matériau d'insertion au Lithium », on entend ici et dans le cadre de l'invention, un motif d'électrode comportant au moins un matériau d'insertion au lithium et au moins un liant en polymère. Eventuellement, le motif d'électrode peut comprendre en plus un conducteur électronique, par exemple des nanofibres de carbone, des nanotubes de carbone ou du noir de carbone.

Par « matériau d'insertion au lithium », en particulier pour les motifs d'électrode positive, on entend ici et dans le cadre de l'invention, un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule $LiMy(XOz)n$ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs.

Par « matériau d'insertion au lithium », en particulier pour les motifs d'électrode négative, on entend également un matériau choisi parmi: oxyde de titane lithié ou non, par exemple $Li_4Ti_5O_{12}$ ou $TiO_2$, graphite, silicium, ou composite de silicium. Plus particulièrement, le matériau des motifs d'électrode négative peut être choisi parmi les matériaux carbonés, les oxydes de titane non lithiés et leurs dérivés et les oxydes de titane lithiés tels que $Li_4Ti_5O_{12}$ et leurs dérivés et un mélange de ceux-ci.

Par « dérivé lithié », on entend ici et dans le cadre de l'invention, des composés de formule $Li_{(4-x1)}M_{x1}Ti_5O_{12}$ et $Li_4Ti_{(5-y1)}N_{y1}O_{12}$, où x1 et y1 sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

Par « dérivé non lithié », on entend ici et dans le cadre de l'invention, $Ti_{(5-y1)}N_{y1}O_{12}$, avec y1 compris entre 0 et 0,2 et N est un élément chimique choisi parmi Na, K, Mg, Nb, Al, Ni, Co, Zr, Cr, Mn, Fe, Cu, Zn, Si et Mo.

De préférence, les anodes sont en graphite et les cathodes en $LiNixCoyMn_{(1-x-y)}O_2$ (NCM).

Par « séparateur », on entend ici et dans le cadre de l'invention, un isolant électrique, conducteur ionique formé par au moins un matériau polymère. Le séparateur est de préférence un film microporeux polymère monocouche ou multicouche à base de polyoléfine PP ou/et PE. Chaque film de séparateur est découpé selon le motif souhaité par un procédé mécanique ou par laser.

Le séparateur peut être mis en oeuvre directement sur les motifs d'électrode (positive ou négative) par impression, de préférence sérigraphie, à partir d'une solution polymère. Selon cette variante, le séparateur peut être choisi parmi les polymères suivants :

- le polyfluorure de vinylidène (PVdF) ou dérivés, le polyacétate de vinyle (PVA), le polyméthacrylate de méthyle (PMMA), le polyoxyéthylène (POE) ou dérivés, le polyéthylène téréphtalate (PET), les polyacryliques ou dérivés, les polyoléfines tels le polypropylène, le polyéthylène, la cellulose ;

- les copolymères de type PVdF-HFP (hexafluoropropylène), PVdF-POE... ;

- les ionomères conducteurs de cations ou polymères cristallins conducteurs de cations ;

- les polymères sensibles thermiquement ou photosensibles qui réticulent sous l'action de la chaleur ou d'un rayonnement UV,

- les monomères polymérisables sous UV ou par voie thermique, porteurs ou non d'une charge ionique à base d'un sel de lithium, comme par exemple les PolyHIPE.

Le polymère est mis en solution dans un solvant, ou dans un mélange solvant / non-solvant dans le cas d'un procédé d'inversion de phase.

La solution de polymère est déposée sur les motifs d'électrode sous forme d'une fine couche puis le solvant est évaporé par passage de l'électrode dans un four en continue ou en statique. Selon le polymère et le procédé de mise en oeuvre utilisé, la fine couche du composant électrolytique peut être poreuse, dense ou gélifiée en présence de l'électrolyte. L'épaisseur de la couche polymère est de préférence comprise entre 5 et 40 $\mu$m.

D'autres séparateurs peuvent être envisagés comme des composites constitués d'une couche polymère de très faible épaisseur, de l'ordre de 15 $\mu$m. Le polymère utilisé peut être le PET ou polyéthylène téréphtalate. Cette feuille très fine de polymère peut être ensuite recouverte de grains de céramiques en alumine ($Al_2O_3$) et de silice ($SiO_2$). On peut citer ici le séparateur commercialisé sous la dénomination SEPARION par la société EVONIK.

On peut aussi envisager des séparateurs à base de polymères renforcés pas des fibres de verre pour des caractéristiques mécaniques. Ces séparateurs sont des non tissés car les fibres de verre sont uniquement mélangées entre elles de manière aléatoire.

Enfin, on peut envisager des séparateurs céramiques comportant notamment de l'alumine, qui a comme avantage d'avoir un effet retardateur sur l'emballement thermique.

L'électrolyte selon l'invention, peut être un liquide formé par un mélange de carbonate et au moins un sel de lithium. Par « sel de Lithium », on entend de préférence, un sel choisi parmi $LiPF_6$, $LiClO_4$, $LiBF_4$ et $LiAsF_6$.

Alternativement, l'électrolyte peut comprendre un ou plusieurs liquide ionique, à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe. A titre d'exemples de liquides ioniques, on peut citer des liquides ioniques à base d'anions hydrophobes comme le trifluorométhanesulfonate ($CF_3SO_3$), bis (trifluorométhanesulfonate imide [$(CF_3SO_2)_2N$] et tris(trifluorométhanesulfonate) méthide [$(CF_3SO_2)_3C$].

De préférence, la surface de chaque motif d'électrode négative est supérieure à la surface de chaque motif d'électrode positive. On s'assure ainsi que tous les ions métal du matériau d'insertion positif, tels que les ions Li+ dans un accumulateur au lithium, puissent venir migrer vers l'électrode négative et ainsi s'intercaler dans la structure. Outre l'alignement des motifs d'électrode positive avec ceux de l'électrode négative, on peut également augmenter la surface des motifs d'électrode négative comparativement à ceux d'électrode positive. Cela peut correspondre à une bande de matériau actif, rajoutée sur chaque côté de chaque motif d'électrode négative. Une bande rajoutée peut typiquement avoir une largeur de 1mm.

L'invention a enfin pour objet un procédé de réalisation d'un système électrochimique étanche comprenant les étapes suivantes :

a/ obtention d'un motif continu de matériau actif d'électrode sur un substrat électriquement conducteur et poreux formant un collecteur de courant ;

b/ réalisation d'au moins une jonction électriquement conductrice entre au moins une languette électriquement conductrice et dense et le substrat, par scellage thermique au moyen d'un polymère thermofusible électriquement conducteur,

c/ réalisation sur chacune des faces principales de la languette, d'au moins un ruban d'étanchéité destiné à la fermeture étanche de l'emballage,

d/ scellement entre ruban d'étanchéité et emballage.

Les avantages de l'architecture d'un accumulateur ou batterie selon l'invention comparativement aux architectures à électrodes avec substrat collecteur de courant en carbone selon l'état de l'art sont nombreux parmi lesquels on peut citer :

- une meilleure étanchéité car la fermeture de l'emballage souple est réalisée sur un matériau dense des électrodes de l'accumulateur, à savoir la mise en oeuvre de jonctions carbone-métal contenant un ruban d'étanchéité,

- une résistance de contact électrique plus faible au niveau de la jonction de par une surface de contact plus élevée du fait de la liaison par un polymère électriquement conducteur entre la languette métallique et le substrat à base de fibres de carbone,

- une section de passage du courant plus importante pour permettre à la batterie de supporter de plus forts courants, en vue d'applications qui nécessitent de la puissance (forts courants de charge et de décharge),

- l'absence de compromis à trouver entre résistance mécanique et surface de contact car pas de trous créés comme pour le rivetage selon l'état de l'art.

D'autres avantages et caractéristiques de l'invention ressortiront mieux à la lecture de la description détaillée d'exemples de mise en oeuvre de l'invention faite à titre illustratif et non limitatif en référence aux figures suivantes.

**Brève description des dessins**

[Fig 1] la figure 1 est une vue schématique en perspective éclatée montrant les différents éléments d'un accumulateur lithium-ion.

[Fig 2] la figure 2 est une vue de face montrant un accumulateur lithium-ion avec son emballage souple selon l'état de l'art.

[Fig 3] la figure 3 est une vue en perspective d'un accumulateur lithium-ion avec son emballage souple selon l'état de l'art.

[Fig 4] la figure 4 est une reproduction d'une vue photographique d'un exemple de languette métallique, telle qu'elle est destinée à être soudée à un collecteur de courant d'une électrode afin de former un pôle d'accumulateur lithium-ion selon l'état de l'art.

[Fig 5] la figure 5 est une reproduction d'une vue photographique de la connexion externe assurée par le substrat collecteur de courant de l'électrode positive qui est découpée selon une forme de languette afin de former un pôle d'accumulateur lithium-ion selon l'état de l'art.

[Fig 6] la figure 6 est une reproduction d'une vue photographique d'une partie d'électrode positive selon l'invention comprenant un substrat à base de fibres de carbone supportant sur une de ses faces principales un motif de matériau d'insertion positif au lithium.

[Fig 7] la figure 7 est une reproduction d'une vue photographique d'une partie d'électrode négative selon l'invention comprenant un substrat à base de fibres de carbone supportant sur une de ses faces principales un motif de matériau d'insertion négatif au lithium.

[Fig 8] la figure 8 illustre en vue en perspective un exemple de réalisation par une technique de sérigraphie de motifs d'électrode sur substrat à base de fibres de carbone.

[Fig 9] la figure 9 est une vue schématique en montrant une liaison obtenue par scellement thermique d'un polymère thermofusible entre une languette de connexion électrique et un substrat collecteur d'électrode à base de carbone.

[Fig 10] la figure 10 est une vue photographique d'une liaison comme celle de la figure 9.

[Fig 11] la figure 11 reprend la figure 9 en montrant en plus l'intégration d'un ruban d'étanchéité autour de la languette de connexion.

[Fig 12] la figure 12 est une reproduction d'une vue photographique d'une partie d'électrode positive selon l'invention comprenant un substrat à base de fibres de carbone supportant sur une de ses faces principales un motif de matériau d'insertion positif au lithium et une languette métallique de connexion électrique liée au substrat par une jonction obtenue par scellement thermique d'un polymère thermofusible.

[Fig 13] la figure 13 est une reproduction d'une vue photographique d'une partie d'électrode négative selon l'invention comprenant un substrat à base de fibres de carbone supportant sur une de ses faces principales un motif de matériau d'insertion positif au lithium et une languette métallique de connexion électrique liée au substrat par une jonction obtenue par scellement thermique d'un polymère thermofusible.

[Fig 14] la figure 14 est une vue en perspective montrant une étape de réalisation d'un accumulateur Li-ion selon l'invention comprenant une électrode positive selon la figure 12 et une électrode négative selon la figure 13.

[Fig 15] la figure 15 est une vue en perspective montrant l'accumulateur Li-ion selon la figure 14 une fois finalisé.

## Description détaillée

Par souci de clarté, les mêmes références désignant les mêmes éléments d'un accumulateur selon l'état de l'art et d'un accumulateur selon l'invention sont utilisées pour toutes les figures 1 à 15.

On précise que les différents éléments selon l'invention sont représentés uniquement par souci de clarté et qu'ils ne sont pas à l'échelle.

Les figures 1 à 5 ont déjà été commentées en préambule. Elles ne seront donc pas détaillées ci-après.

L'invention est décrite ci-après en référence à un exemple de réalisation d'une électrode positive 2 selon l'invention et d'une électrode négative 3 selon l'invention.

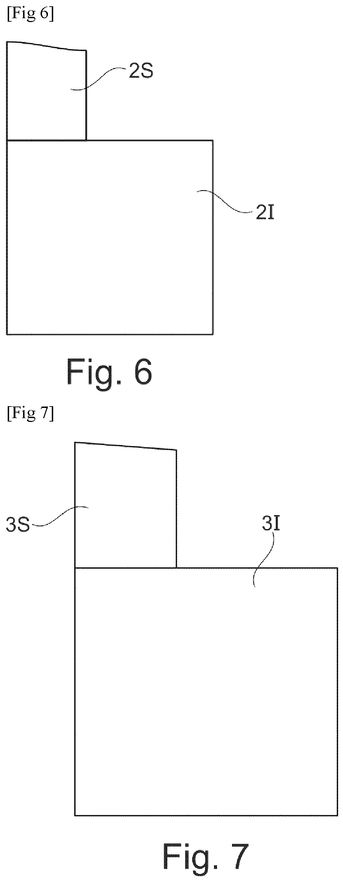

L'électrode positive 2 comprend tout d'abord un substrat à base de fibres de carbone 2S formant un collecteur de courant et supportant, sur une de ses faces principales, un motif continu de matériau actif d'insertion positif d'ion métal 2I (figure 6).

L'électrode négative 3 comprend elle aussi un substrat à base de fibres de carbone 3S formant un collecteur de courant et supportant, sur une de ses faces principales, un motif continu de matériau actif d'insertion négatif d'ion métal 3I (figure 7).

A titre d'exemple, les fibres de carbone à partir desquelles un substrat 2S ou 3S est réalisé peuvent avoir un diamètre d'environ 7 $\mu$m et une densité de 2. Un substrat 2S ou 3S à base de ces fibres de carbone peut ainsi présenter une épaisseur de 150 $\mu$m, une masse volumique de 628 mg/cm$^3$ et une porosité de 69%.

Pour chacune de ces électrodes 2, 3 on obtient le motif d'électrode en réalisant les quatre étapes principales 1/ à 4/ suivantes.

Etape 1/: la préparation de l'encre d'électrode par le mélange des constituants à savoir le matériau actif, le liant polymère et le conducteur électronique. Le liant polymère, du PVdF ou un polymère soluble dans l'eau, a pour fonction d'apporter les propriétés mécaniques des électrodes tout en assurant un bon contact entre l'électrolyte et les grains du matériau. Le conducteur électronique, souvent du noir de carbone, améliore quant à lui la conductivité électronique des électrodes.

Etape 2/: La mise en oeuvre de l'électrode est réalisée par une technique d'impression par sérigraphie.

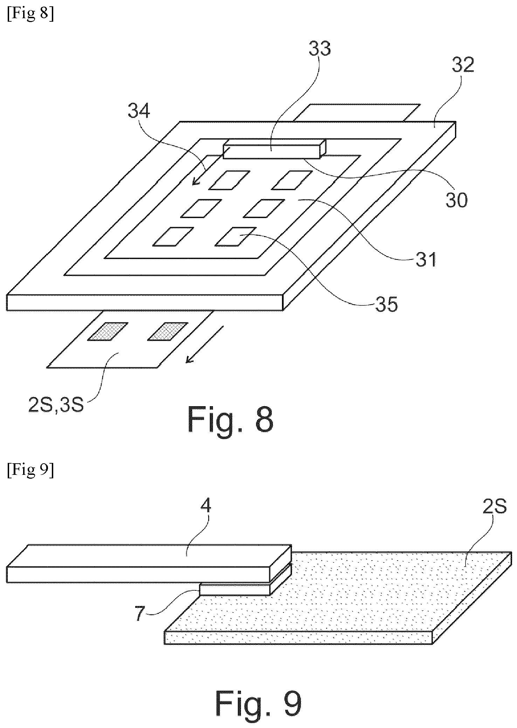

La figure 8 illustre un dépôt par sérigraphie. Un cordon d'encre 30 obtenue selon l'étape 1/ est déposé directement sur le masque de sérigraphie 31 reposant lui-même sur un cadre 32. Le cordon d'encre 30 est ensuite poussé par une racle 33 suivant une vitesse réglable 34.

La pression appliquée, également réglable, sur la racle 33 permet le passage de l'encre à travers le masque 31 et de déposer l'encre sur le substrat 2S, 3S collecteur de courant à base de fibres de carbone, ce qui forme ainsi des motifs d'électrodes 35.

La pression sur la racle 33 permet d'ajuster le réglage de la capacité surfacique dans le cas où les motifs 35 sont des pochoirs, et permet le passage de l'encre 30 à travers les mailles de la grille dans le cas où les motifs 35 doivent être séparés. Un motif 35 peut être de forme géométrique simple comme un carré, rectangle, rond mais peut être également plus complexe (calligraphie...). La capacité surfacique est réglée dans le cas de la sérigraphie par l'épaisseur du masque 31 et par la dimension et la forme de la maille si les motifs 35 d'impression sont obtenus par une grille. Cette technique d'impression n'est pas une technique d'impression « roll-to-roll » mais « reel-to-reel », c'est-à-dire semi-continue. Elle est réalisée sur un support d'impression 2S, 3S, en l'occurrence le substrat en non tissé de carbone.

Etape 3/: Une fois l'encre déposée sur le substrat à base de fibres de carbone, 2S, 3S on procède à son séchage. Le solvant est alors évaporé par passage de l'électrode dans un four en continu ou en statique dans une étuve ventilée.

Etape 4/: Les électrodes sont ensuite calandrées puis découpées selon le motif visé par l'application.

Dans l'exemple illustré, l'électrode positive 2 comprend en tant que matériau actif LiNi$_{0.6}$Co$_{0.2}$Mn$_{0.2}$O$_2$, désigné par NCM622 et l'électrode négative 3 est à base de graphite.

On procède ensuite à la réalisation de jonctions d'une languette métallique 4, 5 avec le substrat à base de fibres de carbone 2S, 3S respectivement de l'électrode positive 2 et de l'électrode négative 3.

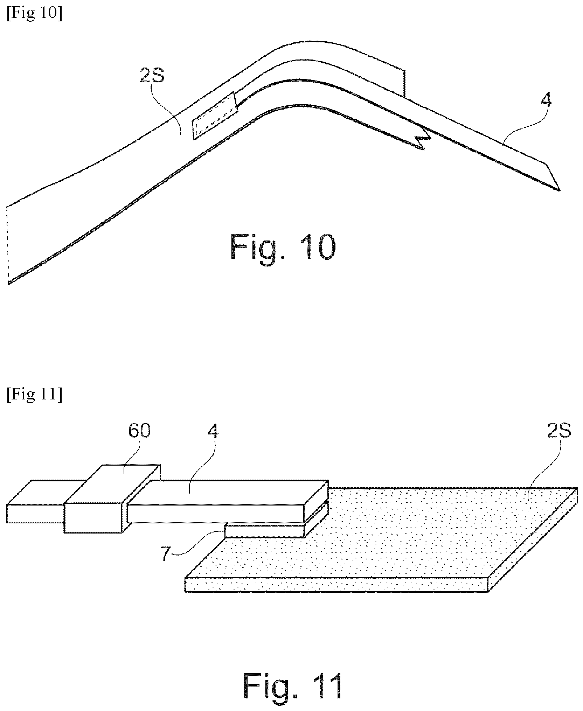

Un exemple de jonction est montré aux figures 9 et 10 : le polymère thermofusible électriquement conducteur 7 est intercalé entre le collecteur de courant poreux à base de fibre de carbone 2S et la languette métallique 4.

De plus, un ruban d'étanchéité 60 est utilisé afin de garantir l'étanchéité de la fermeture de l'emballage sur ces languettes denses et non plus sur des languettes poreuses à base de fibres de carbone. Le ruban d'étanchéité 60 peut être soit laminé-collé sur la languette métallique (languette vendue avec le ruban d'étanchéité), soit rapporté et fixé entre l'emballage et les languettes autour de celles-ci.

La figure 11 représente le polymère thermofusible électriquement conducteur 7 intercalé entre le collecteur de courant poreux à base de fibre de carbone 2S et la languette métallique 4 avec ruban d'étanchéité 60.

Dans l'exemple illustré, pour réaliser ces jonctions carbone-métal, on utilise une languette d'aluminium avec ruban d'étanchéité laminé-collé 60, de largeur 5 mm et d'épaisseur 0,5 mm, pour l'électrode positive NCM 2 et une languette de nickel avec ruban d'étanchéité laminé-collé 5, de largeur 5 mm et d'épaisseur 0,5 mm, pour l'électrode négative de graphite 3.

Ces languettes métalliques 4, 5 sont fixées sur le substrat collecteur à base de fibres de carbone 2S, 3S par l'intermédiaire d'un film polymère thermofusible électriquement conducteur 7 intercalé entre chaque languette métallique 4, 5 et le substrat collecteur à base de fibres de carbone 2S, 3S qui lui est associé.

Le film polymère thermofusible électriquement conducteur 7 choisi est de composition PP chargé en noir de carbone à un pourcentage massique de 40%, commercialisé sous la référence «*CC00024002BG - 46-BK-80 BK PP MASTERBATCH* » de la compagnie POLYONE.

Le film polymère thermofusible électriquement conducteur est préalablement mis en oeuvre à partir de granulés par pressage à chaud à 200°C sous 0,5 MPa pendant 30 secondes. L'épaisseur du film obtenue est de 500 $\mu$m.

Le scellage thermique est réalisé par l'intermédiaire d'une thermo-scelleuse, commercialisée sous la référence « TP-701-B Heat Seal Tester » de la compagnie Tester Sangyo Co. La température des mors inférieur et supérieur est fixée à 200°C. Le scellage thermique s'effectue à une pression de 0,5 MPa pendant 6 secondes.

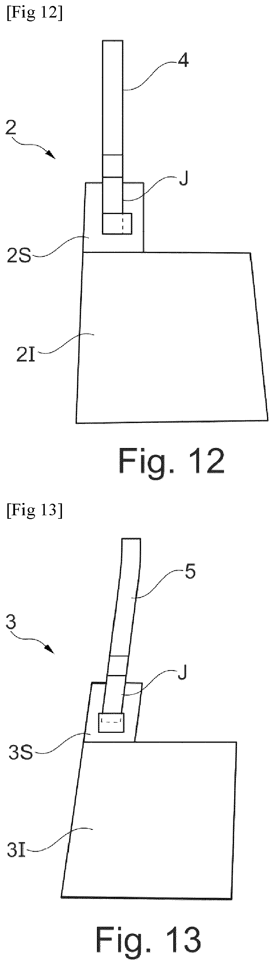

Les jonctions carbone-métal J obtenues par scellage thermique du film polymère thermofusible électriquement conducteur 7 sont montrées respectivement en figure 12, pour l'électrode positive NCM 2 avec sa languette en aluminium 4 et en figure 13, pour l'électrode négative de graphite 3 avec sa languette en nickel 5.

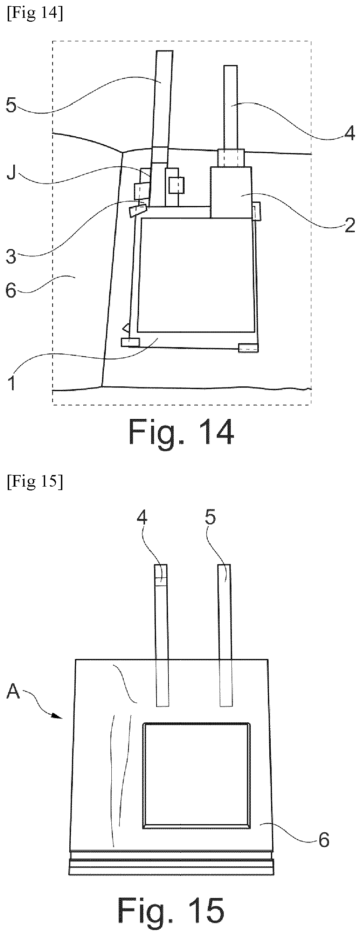

Une fois les électrodes positive NCM 2 et négative de graphite 3 selon l'invention finies avec leurs jonctions J avec languettes métalliques 4, 5 on procède à la réalisation de l'accumulateur A comme usuellement par empilement de l'électrode positive 2, de l'électrode négative 3 et d'un séparateur isolant électriquement de type polymère microporeux 1 intercalé entre l'électrode positive 2 et l'électrode négative 3 (figure 14).

Un emballage souple 6 étanche à l'électrolyte et à l'air, de type NADR-0N25/AL40/CPP40 du fabricant Showa Denko est agencé pour contenir les électrodes positive 2 et négative 3 et le film séparateur microporeux tout en étant traversé par les languettes 4, 5 formant les pôles de l'accumulateur.

On procède au final à la fermeture de l'emballage souple 6. Trois côtés de l'emballage sont ainsi scellés thermiquement et le quatrième côté est maintenu ouvert pour pouvoir activer l'accumulateur qui consiste à remplir l'intérieur du récipient d'emballage ainsi formé en électrolyte. Après l'activation de l'accumulateur, ce quatrième côté est également scellé thermiquement (figure 15).

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention.

## Revendications

1. Système électrochimique étanche, comprenant :

   - un emballage (6);
   - un substrat (2S, 3 S) électriquement conducteur et poreux, formant un collecteur de courant et supportant, sur au moins une de ses faces principales, au moins un motif continu de matériau actif d'une électrode (2I, 3I); le substrat poreux étant de préférence à base de fibres de carbone ;
   - au moins une languette (4, 5) électriquement conductrice et dense, liée au substrat selon au moins une jonction électriquement conductrice (J) obtenue par scellage thermique d'un polymère thermofusible électriquement conducteur (7), la languette supportant sur chacune de ses faces principales au moins un ruban d'étanchéité scellé à l'emballage pour garantir la fermeture étanche de celui-ci.

2. Système selon l'une des revendications précédentes, l'épaisseur de la languette étant comprise entre 6 et 500$\mu$m.

3. Système selon l'une des revendications précédentes, la languette étant métallique, de préférence en aluminium, en cuivre ou en nickel.

4. Système selon l'une des revendications précédentes, le polymère thermofusible électriquement conducteur étant un composé comprenant un polymère thermofusible comprenant au moins une charge électriquement conductrice de préférence à base de carbone.

5. Système selon la revendication 4, la charge électriquement conductrice à base de carbone étant choisie parmi le noir de carbone, les fibres de carbone, les nanotubes de carbone, le graphite, le graphène et leurs dérivés, ou un mélange de ces composés carbonés, ou étant à base d'un métal, de préférence sous la forme de fils métalliques en aluminium, cuivre ou nickel.

6. Système selon la revendication 4 ou 5, le taux de chargement en charge électriquement conductrice du polymère thermofusible étant compris entre 5 et 95 % de la masse totale du composé, avantageusement encore compris entre 15 et 55 % massique et encore plus avantageusement entre 25 et 45 % de la masse totale du composé.

7. Système selon l'une des revendications 4 à 6, le polymère thermofusible est un élastomère de type polypropylène (PP) et ses dérivés ou polyéthylène (PE) et ses dérivés. Il peut être aussi un thermoplastique de type polyamide (PA) ou poly(téréphtalate d'éthylène) (PET) ou polyéther éther cétone (PEEK) et ses dérivés ou polysulfone (PS) et ses dérivés

8. Système selon l'une des revendications précédentes, le polymère thermofusible électriquement conducteur étant sous la forme de granulés ou d'un film avantageusement mis en oeuvre préalablement au scellement thermique.

9. Système selon la revendication 8, le film polymère thermofusible électriquement conducteur ayant une épaisseur comprise entre 20 et 500 $\mu$m, avantageusement comprise entre 50 et 200 $\mu$m.

10. Système selon l'une des revendications précédentes, le substrat poreux étant un substrat non tissé à base de fibres de carbone.

11. Système selon la revendication 10, le substrat non tissé étant réalisé à partir de fibres de carbone de diamètre compris entre 2 et 20 $\mu$m, préférentiellement selon un facteur de forme entre diamètre et longueur supérieur à 10, et de préférence une densité comprise entre 1,8 et 2,2.

12. Système selon la revendication 10 ou 11, le substrat non tissé ayant une épaisseur comprise entre 100 et 250 $\mu$m, de préférence une masse volumique comprise entre 30 et 1100 mg/cm3, de préférence une porosité comprise entre 50 et 98%.

13. Système selon l'une des revendications précédentes, la largeur d'un ruban d'étanchéité étant comprise entre 0,5 et 1 cm, l'épaisseur d'un ruban d'étanchéité étant de préférence comprise entre 0,05 et 0,2 mm.

14. Accumulateur électrochimique (A), notamment métal-ion, constitué à partir d'un système électrochimique étanche selon l'une des revendications précédentes, comprenant un empilement des éléments suivants:

 - au moins une électrode négative;
 - au moins une électrode positive;
 - au moins un film de séparateur isolant électriquement intégrant un électrolyte, agencé en contact avec le motif d'électrode négative et le motif d'électrode positive;
 - un emballage (6) agencé pour contenir les électrodes négative et positive, et le film de séparateur, avec étanchéité tout en étant traversé par un premier et un deuxième pôles de l'accumulateur constitués chacun par la languette conductrice scellée thermiquement par un polymère électriquement conducteur au substrat poreux de l'électrode négative et de l'électrode positive, les rubans d'étanchéité (60) des électrodes négative et positive étant scellés thermiquement à l'emballage (6).

15. Procédé de réalisation d'un système électrochimique étanche comprenant les étapes suivantes :

 a/ obtention d'un motif continu de matériau actif d'électrode sur un substrat électriquement conducteur et poreux formant un collecteur de courant ;
 b/ réalisation d'au moins une jonction électriquement conductrice entre au moins une languette électriquement conductrice et dense et le substrat, par scellage thermique au moyen d'un polymère thermofusible électriquement conducteur,
 c/ réalisation sur chacune des faces principales de la languette, d'au moins un ruban d'étanchéité destiné à la fermeture étanche de l'emballage,
 d/ scellement entre ruban d'étanchéité et emballage.

[Fig 1]

Fig. 1

[Fig 2]

Fig. 2

[Fig 3]

Fig. 3

[Fig 4]

Fig. 4
(ETAT DE L'ART)

[Fig 5]

Fig. 5

[Fig 6]

2S

2I

Fig. 6

[Fig 7]

3S

3I

Fig. 7

[Fig 8]

Fig. 8

[Fig 9]

Fig. 9

[Fig 10]

**Fig. 10**

[Fig 11]

**Fig. 11**

[Fig 12]

Fig. 12

[Fig 13]

Fig. 13

[Fig 14]

Fig. 14

[Fig 15]

Fig. 15

Europäisches
Patentamt

European
Patent Office

Office européen
des brevets

# RAPPORT DE RECHERCHE EUROPEENNE

Numéro de la demande

EP 23 16 0815

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2020/036033 A1 (LIN MENG-CHANG [US] ET AL) 30 janvier 2020 (2020-01-30) | 1-12,14, 15 | INV.<br>H01M4/66 |
| Y | * alinéas [0135], [0290], [0304] – [0306]; figures 1,3 *<br>----- | 13 | H01M50/105<br>H01M50/186<br>H01M50/198 |
| Y | EP 3 486 971 A1 (COMMISSARIAT ENERGIE ATOMIQUE [FR]) 22 mai 2019 (2019-05-22)<br>* alinéas [0049] – [0050] *<br>----- | 13 | H01M50/528<br>H01M50/536<br>H01M50/553<br>H01M50/562 |
| A | WO 2020/230166 A1 (LOG 9 MATERIALS SCIENT PRIVATE LIMITED [IN])<br>19 novembre 2020 (2020-11-19)<br>* alinéa [0052] *<br>----- | 1-15 | H01M10/058<br>H01M10/0525 |
| A | US 2010/285352 A1 (JUZKOW MARC [US] ET AL) 11 novembre 2010 (2010-11-11)<br>* alinéas [0006], [0008], [0025], [0027] – [0028], [0030], [0032], [0073] *<br>----- | 1-15 | |

DOMAINES TECHNIQUES RECHERCHES (IPC)

| A | CN 113 675 374 A (BYD CO LTD) 19 novembre 2021 (2021-11-19)<br>* le document en entier *<br>----- | 1-15 | H01M |

Le présent rapport a été établi pour toutes les revendications

| Lieu de la recherche | Date d'achèvement de la recherche | Examinateur |
|---|---|---|
| Munich | 29 juin 2023 | Monti, Adriano |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 16 0815

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-06-2023

| Document brevet cité au rapport de recherche | Date de publication | Membre(s) de la famille de brevet(s) | | Date de publication |
|---|---|---|---|---|
| US 2020036033 A1 | 30-01-2020 | AUCUN | | |
| EP 3486971 A1 | 22-05-2019 | EP | 3486971 A1 | 22-05-2019 |
| | | FR | 3073983 A1 | 24-05-2019 |
| | | US | 2019157683 A1 | 23-05-2019 |
| WO 2020230166 A1 | 19-11-2020 | CN | 113892203 A | 04-01-2022 |
| | | EP | 3970217 A1 | 23-03-2022 |
| | | JP | 2022532662 A | 15-07-2022 |
| | | KR | 20220009399 A | 24-01-2022 |
| | | WO | 2020230166 A1 | 19-11-2020 |
| US 2010285352 A1 | 11-11-2010 | CN | 102047488 A | 04-05-2011 |
| | | EP | 2274788 A2 | 19-01-2011 |
| | | JP | 2011514639 A | 06-05-2011 |
| | | KR | 20100137496 A | 30-12-2010 |
| | | US | 2010285352 A1 | 11-11-2010 |
| | | US | 2012141864 A1 | 07-06-2012 |
| | | WO | 2009111744 A2 | 11-09-2009 |
| CN 113675374 A | 19-11-2021 | AUCUN | | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060121348 A
- US 7348098 B
- US 7338733 B
- US 2008060189 A
- US 20080057392 A
- US 7335448 B
- US 8465871 B2
- EP 2619832 B1
- WO 2017055705 A
- EP 3486971 B1
- CN 202088602
- CN 202308101
- CN 107910486
- CN 109216703
- CN 107591554
- EP 3089241 A
- CN 106113484
- EP 2975681 B1

**Littérature non-brevet citée dans la description**

- PP Black Masterbatch-MBB1231. CHUANGDA PLASTIC INDUSTRY CO., LIMITED
- CC00024002BG - 46-BK-80 BK PP MASTERBATCH. POLYONE